# EUROPÄISCHE PATENTSCHRIFT

(11) **EP 2 018 131 B1**
(45) Veröffentlichungstag und Bekanntmachung des Hinweises auf die Patenterteilung: **29.08.2018**
(21) Anmeldenummer: 07723835.0
(22) Anmeldetag: 30.03.2007
(51) Int. Cl.: A61C 5/60

(54) **EINWEGVERPACKUNGSSYSTEM ZUR LAGERUNG UND AUSBRINGUNG VON MEHRKOMPONENTENMATERIALIEN**
SINGLE-USE PACKAGING SYSTEM FOR STORING AND DISPENSING MULTICOMPONENT MATERIALS
SYSTÈME D'EMBALLAGE À USAGE UNIQUE PERMETTANT LE STOCKAGE ET LA DISTRIBUTION DE MATIÈRES À PLUSIEURS COMPOSANTS

(30) Priorität: 30.03.2006 DE 102006015238
(43) Veröffentlichungstag der Anmeldung: 28.01.2009
(73) Patentinhaber: S & C Polymer Silicon- und Composite-Spezialitäten GmbH, 25335 Elmshorn (DE)
(72) Erfinder: ENGELBRECHT, Jürgen, 22607 Hamburg (DE)
(74) Vertreter: Forstmeyer, Dietmar
(86) Internationale Anmeldenummer: PCT/EP2007/002894
(87) Internationale Veröffentlichungsnummer: WO 2007/112981

(56) Entgegenhaltungen:
- EP-A- 1 153 579
- WO-A-00/65022
- WO-A-01/62175
- US-A- 3 825 410
- US-A- 4 362 242
- US-B1- 6 419 414

## Beschreibung

Die Erfindung betrifft ein Einwegverpackungssystem zur Lagerung und Ausbringung von Mehrkomponentenmaterialien, und ein Verfahren zum Herstellen eines direkt applizierbaren Gemisches aus mehreren Komponenten eines Mehrkomponentenmaterials.

Bei dentalen Restaurationen und medizinischen Zubereitungen zu Behandlungen von Patienten sind vielfach speziell zusammengesetzte mehrkomponentige Flüssigkeiten oder Pasten oder Pulver/Flüssigkeiten-Formulierungen erforderlich. Diese Art von Formulierungen sind z.B. Zahnadhäsive, Zahnversiegelungs-, Zahnfüllungs- oder Zementierungsmaterialien.

Beispielsweise wird vor dem Füllen einer Zahnkavität diese mit einem schützenden adhäsiven Bondingmaterial belegt. Dieses schützende Bonding- oder Adhäsiv-Material stellt außer der Haftwirkung zum Füllungsmaterial eine Abdichtung gegen eindringende zahnschädigende oder gar zahnabtötende Stoffe wie Bakterien oder Viren dar und wirkt somit als Barriere zwischen dem Füllungsmaterial und dem Zahnkörper.

Eine übliche Art eine Kavität in dieser Form vorzubereiten ist das Aufbringen eines Lackes, der meistens in kleinen Flaschen erhältlich ist. Ein kleiner Pinsel wird in die Flasche eingetaucht und der Lack dann in der Kavität aufgetragen. Bei mehrkomponentigen Adhäsiven muss der Lack vorher auf einer Mischpalette zurechtgemischt werden. Das aufgetragene Material trocknet und hinterlässt dabei den gewünschten Adhäsiv-Film.

Ein Problem bei dieser Methode ist die drohende Kreuzkontamination bei der Wiederverwendung der Flaschen bzw. auch des Pinsels. Selbst bei sorgfältiger Reinigung des Pinsels, bevor dieser wieder in eine Flasche eingetaucht wird, droht eine Bakterienkontamination der Flüssigkeit und des Materials, die auf weitere Patienten übertragen werden kann. Bei Mehrkomponenten-Systemen können die Komponenten durch Pinselkontamination sogar vorzeitig reagieren.

Die Adhäsive mit der größten Anwendungsbreite für die Zahnärzte sind Mehrkomponentensysteme. Die Einzelkomponenten dieser Mehrkomponentensysteme werden in wieder verschließbare Vorratsflaschen aufgefüllt, so dass eine ausreichende Materialmenge für mehrere Restaurationen vorgehalten bzw. gelagert wird.

Je nachdem welches Adhäsiv-System benutzt wird, müssen Zahnarzt und Assistent einen nicht unerheblichen Aufwand betreiben. Die benötigten Vorratsbehälter sind aus dem Lagerort zu entnehmen, jeder Behälter ist zu öffnen, die benötigte Menge jeder Komponente ist in einem Anmischbehälter genau zu dosieren, dann sind die Vorratsbehälter wieder zu verschließen und an den Lagerort zurückzustellen. Dies stellt insbesondere dann einen erheblichen Aufwand dar, wenn Mehrkomponentenmaterialien medizinisch oder zahnmedizinisch verarbeitet werden.

Wird ein Zweikomponentensystem mehrfach verwendet, so werden die zusammengehörigen Komponenten jeweils in einem Anmischbehälter dosiert und vor der Anwendung sorgfältig miteinander vermischt. Nachdem die einzelnen Adhäsivkomponenten gemischt sind, werden die Anmischbehältnisse der Einzelkomponenten üblicherweise entsorgt.

Die Handhabung und der Gebrauch solcher Mehrkomponenten-Adhäsiv-Systeme wird allgemein als unbequem angesehen. Bei direkten Restaurationen ist die Handhabung der beschriebenen Adhäsiv-Systeme besonders aufwändig, da die Dosierung und Zubereitung des Restaurationsmaterials eine Vielzahl von Handgriffen zur Dosierung und Vermischung erfordert.

Ein weiteres Problem liegt in der Verdunstung leicht flüchtiger Komponenten aus den Anmischbehältern, was sich nachteilig auswirken kann. Dies ist besonders bei Adhäsiven der Fall, die organische Lösungsmittel enthalten. Dieses kann jedoch auch bei auf Wasser basierenden und anderen Adäsiven auftreten. Zum Zeitpunkt einer erstmaligen Öffnung aller Vorratsbehälter der beteiligten Komponenten ist noch die gewünschte Rezeptur vorhanden. Ist jedoch bereits eine nennenswerte Menge entnommen, d.h. wurden die Behältnisse schon mehrfach geöffnet, hat die Verdunstung von Lösungsmitteln und von leicht flüchtigen Anteilen einen höheren Grad erreicht und die Zusammensetzungen weichen vom Anfangsverhältnis ab. Daraus ergibt sich oft eine erhöhte Viskosität und ein verändertes Mischungsverhältnis, da sich die Konzentrationen einiger Einzelkomponenten durch den Lösungsmittelverlust erhöht haben. Diese Veränderungen wirken sich nachteilig auf die Handhabung und die Qualität sowie die Stärke der Bindung der Adhäsive aus.

Bei Verwendung von größeren Vorratsbehältern entstehen weitere unerwünschte Veränderungen der Komponenten. Diese Veränderungen hängen von der Häufigkeit des Öffnungs-, Entnahme- und Verschlussvorgangs ab. Bei jedem Vorgang besteht zudem die Gefahr der Kontamination der Gesamtvorratsmenge. So kann z.B. die Verschlusskappe des Behälters bei der Entnahme im Behandlungsbereich oder einem anderen nicht sterilen Bereich abgelegt werden. Wird die kontaminierte Verschlusskappe wieder auf den Behälter gesetzt, so kann die gesamte Vorratsmenge kontaminiert werden. Weiteres Kontaminationspotential liegt beim Arzt bzw. bei seinem Assistenten, deren Hände durch Patientenkontakt verunreinigt sein können und so die Verschlusskappe verschmutzen würden, während sie diese beim Öffnungs-, Entnahme- und Verschlussvorgang festhalten.

Eine weitere nachteilige Eigenschaft der bekannten Vorratsbehälter liegt in der Anforderung an die richtige Dosierung des Adhäsiv-Systems durch den Zahnarzt bzw. seinen Assistenten, und zwar bei jeder einzelnen Entnahme. Ist eine Komponente des Systems falsch dosiert, müssen alle Schritte, auch die korrekten Schritte, wiederholt werden. Wurde eine zu große Menge des Adhäsivs zubereitet, so muss der Überschuss entsorgt werden. Derartige Nachteile treten auch bei Pastenzubereitungen oder Pulver/Flüssigkeitszubereitungen auf, welche gegenwärtig in unterschiedlichen Vorratsbehältern angeboten werden.

Demnach besteht Bedarf an einem Verpackungssystem zur Lagerung und Aufbringung von Mehrkomponentenmaterialien insbesondere für flüssige, pastöse oder Pulver/ Flüssigkeitszubereitungen, durch das der Nutzer von den o.a. Handhabungen zu befreit wird. Dazu ist ein Einweg-Behälter für Einkomponenten-Adhäsive zur Verwendung für Zahnärzte aus der EP 0 967 929 B1 bekannt. In dieser Druckschrift wird eine Packung beschrieben, die einen gefüllten Einzeldosierbehälter beinhaltet, der eine abgemessene Menge von ungefähr 0,1 ml Adhäsiv enthält.

Außerdem ist aus der Druckschrift DE-U-92 02 654 eine Ampulle bekannt, welche eine Flüssigkeit inklusive eines Pinsels beinhaltet. Diese Ampulle ist fest verschlossen und abgedichtet. Einmal geöffnet wird die Flüssigkeit mit dem Pinsel appliziert und die Ampulle wieder verschlossen, indem sie in eine kleine Flasche, ähnlich einer kleinen Vorratsflasche, gesteckt wird. Dieses System kann jedoch lediglich für Einkomponentensysteme eingesetzt werden.

Aus der Druckschrift DE 102 43 401 A1 ist eine Verpackung zum Lagern von Substanzen bekannt, wobei die Verpackung eine erste Kammer mit einer fließfähigen ersten Substanz und eine zweite Kammer mit einer zweiten Substanz aufweist, die gegenüber der ersten Kammer flüssigkeitsdicht mit Hilfe einer Bodenfolie und einer Deckfolie, welche die Kammern bilden, getrennt ist. Ferner gibt es einen Bereich, welcher die erste mit der zweiten Kammer verbindet, wobei die Deckfolie und die Bodenfolie derart aneinander gesiegelt sind, dass sich durch Ausübung eines Druckes von außen auf die erste Kammer die Siegelverbindung zwischen den beiden Folien löst und ein Durchtrittskanal entsteht, über den die beiden Substanzen gemischt werden. Diese Verpackung hat den Nachteil, dass lediglich flexible Folien eingesetzt werden, die beim Ausüben eines Druckes auf die erste Kammer eine Mischung der beiden Substanzen in den beiden Kammern verursachen. Bei diesem System besteht die Gefahr, dass einerseits keine vollständige und zuverlässige Mischung der beiden Komponenten gewährleistet werden kann, und dass andererseits aufgrund des Folienmaterials beim Mischvorgang Material der Komponenten austritt, und sich somit die Zusammensetzung der Mischung deutlich verändert, oder die Folien aufreißen, und das Material nicht appliziert werden kann.

Aus der Druckschrift EP 0 895 943 B1 ist eine Vorrichtung zum Lagern und Ausbringen einer fließfähigen Substanz bekannt, wobei ein Behälter mit zwei Kammern wieder aus zwei Folien besteht. Die beiden Kammern sind durch einen von außen aufgebrachten Druck miteinander verbindbar, so dass die flüssigen Komponenten gemischt werden können. Um die gemischte Substanz herausdrücken zu können, weist die eine der beiden Kammern einen versiegelten Ausgang auf, der jedoch auf Überdruck in den Kammern freigegeben werden kann, so dass das Gemisch aus den Kammern zwischen den beiden Folien austritt. Eine derartige Vorrichtung ist auf das Lagern und Ausbringen von fließfähigen Substanzen begrenzt, da ein Mischen von Pulvern praktisch wieder zu dem Ergebnis führt, dass eine intensive Durchmischung des Pulvers mit einer adhäsiven Flüssigkeit nicht zuverlässig bewirkt werden kann, zumal ein aktives Mischen mit einem Hilfswerkzeug nicht möglich ist. Ferner sind Vorrichtungen zum Lagern und Applizieren mehrkomponentiger Dentalmaterialien bekannt, bei denen ein Kunststoffbehälter mit einer ersten Komponente und ein darauf angeordneter Folienbehälter mit einer weiteren Komponente vorgesehen ist. Werden die Folien des Folienbehälters allerdings mit einem Applikationsgerät durchstoßen, so werden substantielle Mengen der im Folienbehälter vorhandenen flüssigen Komponente vermutlich durch Kapillarkräfte zwischen den Folien zurückgehalten. Bei den meist eingesetzten geringen Mengen ist dadurch keine exakte Dosierung der flüssigen Komponenten möglich, was zu Problemen bei den Dentalmaterialien **führen kann.**

Aus der Druckschritt US 6,419,414 ist ein Einwegverpackungssystem zur Lagerung und Ausbringung von Mehrkomponentenmaterialien bekannt, wobei das Einwegverpackungssystem mindestens in zwei Bereiche zur Aufbewahrung und Mischung von Mehrkomponentenmaterialen durch Folien getrennt ist. Aufgabe der Erfindung ist es, die Unzulänglichkeiten und Nachteile im Stand der Technik zu überwinden und dem Benutzer ein Einwegverpackungssystem zur Lagerung und Ausbringung von Mehrkomponentenmaterialien zur Verfügung zu stellen, welches die Reinheit der entnommenen Komponenten gewährleistet. Außerdem soll das Spendersystem eine vordosierte Menge liefern, die Möglichkeit der Verdunstungsgefahr einschränken sowie die Gefahr der Kreuzkontamination minimieren. Ferner soll das Einwegverpackungssystem zur Lagerung und Ausbringung von Mehrkomponentenmaterialien ein einfaches und unkompliziertes und dennoch intensives Mischen ermöglichen. Schließlich soll das System ein exaktes Dosieren von flüssigen Komponenten ermöglichen.

Diese Aufgabe wird mit dem Gegenstand der unabhängigen Ansprüche gelöst. Vorteilhafte Weiterbildungen der Erfindung ergeben sich aus den abhängigen Ansprüchen.

Erfindungsgemäß wird ein Einwegverpackungssystem zur Lagerung und Ausbringung von Mehrkomponentenmaterialien geschaffen, wobei das Einwegverpackungssystem ein steifes Gehäuse aufweist. Dieses ist in mindestens zwei Bereiche zur Aufbewahrung und Mischung von Mehrkomponentenmaterialien durch Folien getrennt. Dazu sind die Folien als Trennmembranen mediendicht und stoffschlüssig an oder in dem Gehäuse angeordnet. In diesem Zusammenhang bedeutet mediendicht insbesondere eine Dichtigkeit gegenüber flüssigen, gasförmigen und festen Stoffen sowie deren Gemischen. Außerdem weisen die Trennfolien Schwachstellen auf, die bei Berührung mit einem spitzen Gegenstand aufreißen, so dass sich die durch die Trennmembranen getrennten Substanzen der Mehrkomponentenmaterialien in dem steifen Gehäuse vermischen und aktiv mischen lassen.

Dieses Einwegverpackungssystem hat den Vorteil, dass die Substanzen in dem Gehäuse bis zum Gebrauch ohne zu verdunsten durch die mediendichten Folien voneinander getrennt sind und sich somit nicht verändern. Außerdem wird die Reinheit der Rezepturen bis zum Gebrauch beibehalten, zumal das Einwegsystem dafür sorgt, dass die Kontaminationsgefahr vermindert wird. Durch das Einwegverpackungssystem wird die Möglichkeit einer Entnahme einer voreingestellten Dosis der Komponenten sichergestellt. Außerdem stellt das Einwegverpackungssystem sicher, dass mehrere Komponenten darin gelagert werden können und vor der Applikation in dem steifen Gehäuse intensiv mischbar sind.
Auch die Gefahr, die bei Folienverpackungen gegeben ist, dass beim Zusammenbringen der Komponenten aus zwei separaten Folienkammern die Folien aufreißen oder beschädigt werden, so dass sich entweder das Mischungsverhältnis ändert oder eine ganze Probe verworfen werden muss, tritt bei dem erfindungsgemäßen Einwegverpackungssystem nicht auf. Das steife Gehäuse hält deutlich höheren Belastungen stand als sämtliche Folienlösungen, die aus dem Stand der Technik bekannt sind. Ferner kann das steife Gehäuse mit seinem Bodenbereich einer intensiven Mischung der Komponenten dienen, und es können auch Pulvermischungen bzw. Pulver/Flüssigkeitsmischungen hergestellt werden, die mit den bekannten Folienlösungen nicht bearbeitet werden können. Gemäß der Erfindung weist das Gehäuse einen steifen Gehäusebodenbereich, steife Gehäusewände und eine dem Gehäuseboden gegenüber angeordnete Öffnung mit Rand auf. Die Öffnung ist von einer Trennmembran abdeckbar, so dass eine erste Komponente in dem Gehäusebodenbereich für eine längere Zeit gelagert werden kann. Ferner ist auf die Öffnung eine an den Querschnitt der Gehäusewände angepasste steife Gehäuseverlängerung aufsetzbar, wobei die Gehäuseverlängerung eine weitere Materialkomponente der Mehrkomponentenmaterialien zwischen zwei Trennmembranen aufweist. Diese beiden Trennmembranen versiegeln mediendicht eine Gehäuseverlängerung. Dabei können die Gehäuseverlängerung und das Gehäuse, bereits für den Gebrauch vorbereitet, miteinander stoffschlüssig verbunden sein. Bei einer separaten Lagerung sind drei Trennmembranen erforderlich, nämlich eine zum mediendichten Verschließen der Öffnung des Gehäuses und zwei weitere Trennmembranen, um die Gehäuseverlängerung und derer Öffnungen beidseitig mediendicht nach Einbringen der zweiten Komponente zu versiegeln.

Ein erfindungsgemäßes Einwegverpackungssystem hat den Vorteil, dass die Menge der einzelnen Komponenten auch bei kleinen Mengen von z.B. weniger als 1 ml pro Komponente oder weniger als 0,5 ml pro Komponente exakt dosiert werden kann. Außerdem sind durch die Trennmembranen des Gehäuses die Komponenten zuverlässig voneinander getrennt und mediendicht eingeschlossen, so dass eine relativ lange Zwischenlagerungszeit ohne Änderung der Eigenschaften der Komponenten möglich ist.

Für den Nutzer kann es von Vorteil sein, wenn vordosierte Komponenten in einem Gehäusebodenbereich mit Wänden und einer aufgesetzten Gehäuseverlängerung bereits vorgefertigt sind, so dass der Nutzer lediglich die Trennmembranen durch einen spitzen Gegenstand aufzureißen hat, um die beiden Komponenten im Bodenbereich des Gehäuses intensiv zu vermischen. Dadurch sind Verwechslungen und Fehlkombinationen der unterschiedlichen Mehrkomponentensysteme für den zahnmedizinischen oder den medizinischen Gebrauch ausgeschlossen.
Vorzugsweise werden in derartigen Gehäusen mit zwei Bereichen Mehrkomponentenmaterialien für einen medizinischen Klebstoff bzw. ein Adhäsiv oder für ein medizinisches Dichtmittel bzw. Sealant oder für ein medizinisches Füllmaterial oder für einen medizinischen Zement oder für einen zahnmedizinischen Versiegelungslack oder für fließfähige medizinische Pasten in den Gehäusebereichen und/oder den Gehäuseverlängerungen vorgesehen. Dazu können die Mehrkomponentenmaterialien z.B. als Flüssigkeitssysteme, Pastensysteme, Pulver/Flüssigkeits-systeme und/oder Gelatinesysteme vorliegen.
Bei einem bevorzugten Einwegverpackungssystem werden mehrere Gehäuseverlängerungen auf ein becherförmiges Gehäuse aufgebracht. Damit ist es möglich, unterschiedliche Komponenten der Mehrkomponentenmaterialien in den Gehäuseverlängerungen aufeinander zu stapeln und sie kurz vor dem Applizieren in dem steifen Gehäuse selbst zu vermischen. Dabei können die Gehäuseverlängerungen unterschiedliche Farben und/oder Markierungen und/oder Balkenkodierungen aufweisen, um sicher zu stellen, dass bei Entnahme aus dem Lager die richtigen Komponenten und Dosierungen eines Mehrkomponentenmaterials miteinander kombiniert werden.

Weiterhin ist es gemäß der Erfindung vorgesehen, dass der Rand der Öffnung des Gehäuses einen Passsitz aufweist, auf dem die Gehäuseverlängerung passgenau und zentriert aufsetzbar ist. Ein derartiger Passsitz kann bereits beim Herstellen des Gehäuses, beim Spritzgießen, bzw. auch bei metallischen Gehäusen beim Tiefziehen in den Gehäuserand eingebracht werden, was das Aufsetzen einer Gehäuseverlängerung mit weiteren Komponenten erleichtert. Ferner ist damit der Vorteil verbunden, dass eine Mehrzahl von Gehäuseverlängerungen mit entsprechenden Passsitzen stapelbar ist. Dabei kann der Gehäusebodenbereich mit den Gehäusewänden einen Hohlraum vorhalten, der geeignet und groß genug ist, sämtliche Komponenten für einen Mischvorgang aufzunehmen, ohne dass beim Mischvorgang das aufgerissene Folienmaterial in die Mehrkomponentensubstanz eingearbeitet wird.

Darüber hinaus ist es vorzugsweise vorgesehen, dass die Trennmembranfolien ein strahlenförmiges in die Membranfolie eingeprägtes Muster als Schwachstelle aufweisen, wobei die eingeprägten Strahlen vom Zentrum der Trennmembran ausgehen. Ein derartiges strahlenförmiges Muster hat den Vorteil, dass beim Aufreißen der Folie gleichmäßige dreieckige Lappen bzw. Fahnen gebildet werden, die sich an die Innenwände der Gehäuseverlängerungen bzw. des becherförmigen Gehäuses anlegen können und somit ein intensives Mischen im Gehäusebodenbereich erlauben, ohne dass Folienmaterial in die Mischung gelangt. Auch andere Muster sind denkbar, wobei darauf geachtet wird, dass sich keine Folienfetzen oder Folienpartikel der Trennmembran beim Aufreißen der Trennmembran verselbständigen.

Wie oben bereits erwähnt sind das steife Gehäuse und die Gehäuseverlängerungen vorzugsweise aus einem polymeren Kunststoff mittels eines Spritzgussverfahrens hergestellt. Andererseits ist es auch möglich, metallische Gehäuse mit einem Tiefziehverfahren bereitzustellen, wobei bevorzugt eine Aluminiumlegierung eingesetzt wird.

Ein Verfahren zum Herstellen eines direkt applizierbaren Gemisches mehrerer Komponenten eines Mehrkomponentenmaterials weist die nachfolgenden Verfahrensschritte auf. Zunächst wird ein Einwegverpackungssystem bereitgestellt, wobei der Gehäusebodenbereich eines steifen Gehäuses und ein Bereich zwischen Trennmembranen jeweils mindestens eine Materialkomponente des Mehrkomponentenmaterials aufweist. Dann wird ein spitzer Gegenstand in eine Schwachstelle der Trennmembranen eingeführt, so dass die Trennmembranen aufreißen. Schließlich erfolgt ein Mischen der im Gehäusebodenbereich des Gehäuses sich sammelnden Komponenten, und anschließend kann die gemischte Substanz aus dem Gehäusebodenbereich zum Applizieren der gemischten Substanz entnommen werden. Abschließend wird die Einwegverpackung entsorgt.

Dieses Verfahren hat den Vorteil, dass völlig sterile und kontaminationsfreie Substanzen medizinisch oder zahnmedizinisch appliziert werden können. Ferner hat es den Vorteil, dass der Nutzer keine Eigendosierung vornehmen muss, da die Komponenten in dem Einwegverpackungssystem präzise vordosiert geliefert werden können. Ferner kann die Sterilität dadurch beibehalten werden, dass ein sterilisiertes zahnmedizinisches Werkzeug oder ein entsprechend keimfreier Applizierpinsel mit einer Spitze eingesetzt wird, um die Komponenten in dem steifen Gehäuse zu mischen. Auch zum Entnehmen der gemischten Substanzen aus dem Bodenbereich können medizinische oder zahnmedizinische sterilisierte Werkzeuge vorzugsweise verwendet werden.

Um ein derartiges Einwegverpackungssystem vorzuhalten und zu lagern, werden vorzugsweise einzelne Komponenten im Bodenbereich des Gehäuses eingebracht und die Öffnung des Gehäuses mit einer Trennmembranfolie stoffschlüssig und mediendicht versiegelt.

So ist es z.B. möglich, dass zur Vorratslagerung mehrerer Komponenten in Gehäuseverlängerungsstücken zunächst eine Öffnung der Gehäuseverlängerungen einseitig, stoffschlüssig und mediendicht verschlossen wird, anschließend in jedes der Gehäuseverlängerungsstücke eine Komponente dosiert eingebracht wird und abschließend die zweite Öffnung der Gehäuseverlängerungsstücke mit einer zweiten Trennmembranfolie stoffschlüssig und mediendicht versiegelt wird. Damit lassen sich eine Vielzahl von unterschiedlichen Komponenten in unterschiedlichen Dosierungen lagern und bevorraten, die bereits optimal dosiert sind.

Zur Schwächung der Trennmembranfolien kann eine beheizte Prägewalze oder ein beheiztes Stempelwerkzeug eingesetzt werden, mit denen ein schwächendes Prägemuster in ein Folienmaterial unter Erwärmung eingeformt wird.

Die Erfindung wird nun anhand der beigefügten Figuren näher erläutert.
- Figur 1: zeigt einen schematischen Querschnitt durch ein Einwegverpackungssystem einer Ausführungsform gemäß dem Stand der Technik vor einem Mischen von Komponenten eines Mehrkomponentenmaterials;
- Figur 2: zeigt einen schematischen Querschnitt durch das Einwegverpackungssystem gemäß Figur 1 nach einem Mischen von Komponenten eines Mehrkomponenten-materials;
- Figur 3: zeigt einen schematischen Querschnitt durch ein Einwegverpackungssystem eines Beispiels vor einem Mischen von Komponenten eines Mehrkomponentenmaterials;
- Figur 4: zeigt einen schematischen Querschnitt durch das Einwegverpackungssystem gemäß Figur 3 nach einem Mischen von Komponenten eines Mehrkomponenten-materials;
- Figur 5: zeigt einen schematischen Querschnitt durch ein Einwegverpackungssystem einer Ausführungsform der Erfindung vor einem Mischen von Komponenten eines Mehrkomponentenmaterials;
- Figur 6: zeigt einen schematischen Querschnitt durch das Einwegverpackungssystem gemäß Figur 5 nach einem Mischen von Komponenten eines Mehrkomponenten-materials;
- Figur 7: zeigt einen schematischen Querschnitt durch ein Einwegverpackungssystem einer weiteren Ausführungs-form der Erfindung vor einem Mischen von Komponenten eines Mehrkomponentenmaterials;
- Figur 8: zeigt einen schematischen Querschnitt durch das Einwegverpackungssystem gemäß Figur 7 nach einem Mischen von Komponenten eines Mehrkomponenten-materials.

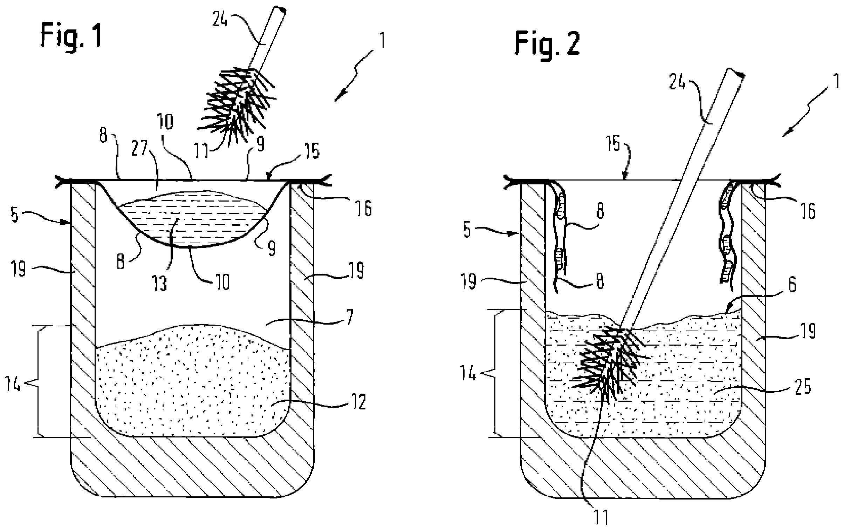

Figur 1 zeigt einen schematischen Querschnitt durch ein Einwegverpackungssystem 1 einer Ausführungsform gemäß dem Stand der Technik.
Figur 2 zeigt einen schematischen Querschnitt durch das Einwegverpackungssystem 1 gemäß Figur 1 nach einem Mischen der Komponenten; zwischen den Folien des durchstossenen Folienbehälters verbleibt ein Anteil einer Komponente.

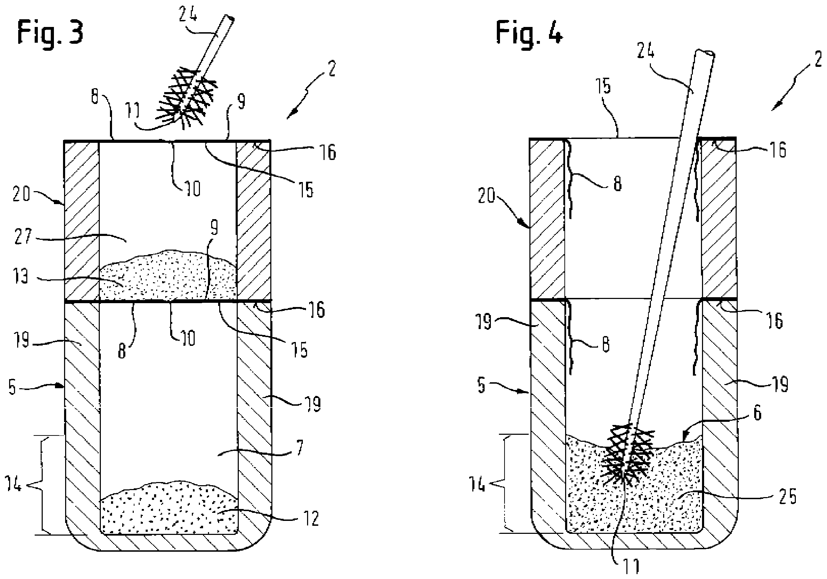

Figur 3 zeigt einen schematischen Querschnitt durch ein Einwegerpackungssystem 2 eines Beispiels vor einem Mischen von Komponenten 12 und 13 eines Mehrkomponenenmaterials. Das Gehäuse 5 weist dazu einen Gehäusebodenbereich 14 und Gehäusewände 19 auf, wobei auf den Gehäusewänden 19 eine Gehäuseverlängerung 20 angeordnet ist, deren Öffnungen 15 durch Folien 8 bzw. Trennmembranen 9 geschlossen sind. Diese Gehäuseerlängerung 20 ist auf den Rand 16 der Öffnung 15 des Gehäuses 5 aufgesetzt, wobei eine Trennmembran 9 zwischen der Gehäuseerängerung 20 und den Gehäusewänden 19 fixiert ist. Diese Fixieung kann mittels Verschweißen oder mittels Verkleben erfolgen. Innerhalb der Gehäuseverlängerung 20 ist auf der eingespannten Trennmembran 9 die zweite Komponente 13 angeordnet, während die erste Komponente 12 im Bodenbereich des steifen Gehäuses 5 dosiert eingebracht ist. Da die Gehäuseverlängerung 20 nach oben durch eine weitere Trennmembran 9 mediendicht und stoffschlüssig auf dem oberen Rand 16 versiegelt ist, kann diese Einwegverpackung mit den Komponenten 12 und 13 bis zur Applizierung gelagert werden.
Durch Strukturierung der in Figur 3 gezeigten Schwachstelle 10 wird dafür gesorgt, dass von den Foliestücken 8 keine Partikel in das Gemisch 25 geraten. So kann vorzugsweise ein strahlenförmiges Muster in die Folien 8 eingeprägt werden, so dass dreieckförmige Fahnen in den Behälter 5 entlang der Gehäusewände 19 hineinhängen und nicht in das Gemisch 25 hineinfallen.

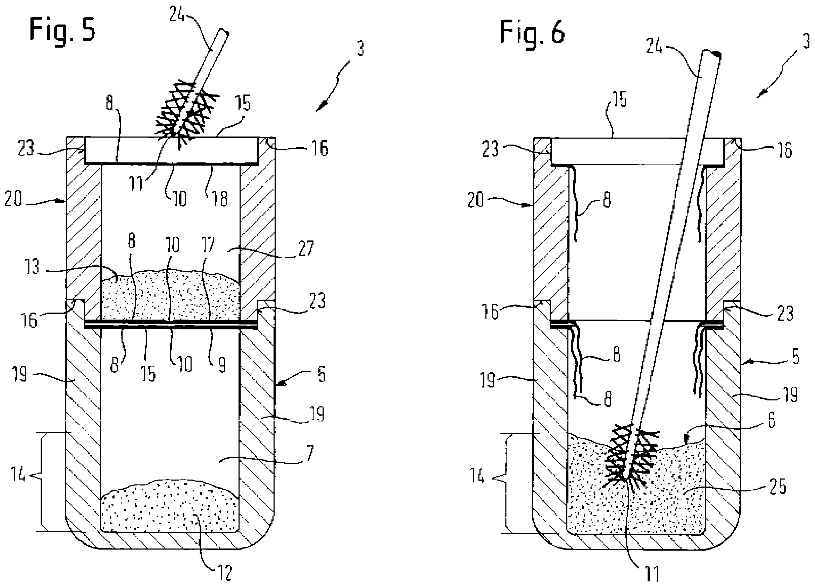

Figur 4 zeigt einen schematischen Querschnitt durch das Einwegverpackungssystem 2 gemäß Figur 3 nach einem Mischen der Komponenten zu einem Mehrkomponentenmaterial 6. Dazu wird ein spitzes Werkzeug oder ein Applizierpinsel 24 mit einer Spitze 11 durch die Trennmembranen 9 geführt, so dass diese an den vorgesehenen Stellen aufreißen und sich die beiden in Figur 3 gezeigten Komponenten 12 und 13 im Bodenbereich 14 des Gehäuses 5 sammeln und dort mit Hilfe des Applizierpinsels 24 oder mittels eines entsprechenden Werkzeugs gemischt werden können. Figur 5 zeigt einen schematischen Querschnitt durch ein Einwegverpackungssystem 3 gemäß einer Ausführungsform der Erfindung vor einem Mischen von Komponenten 12 und 13 eines Mehrkomponentenmaterials. Elemente mit gleichen Funktionen wie in den vorhergehenden Figuren werden mit gleichen Bezugszeichen gekennzeichnet und nicht extra erörtert. Der Unterschied zu dem vorhergehenden Einwegverpackungssystem liegt darin, dass der Rand 16 der Öffnung 15 einen Passsitz 23 aufweist, so dass eine Verlängerung 20 zentriert auf den Rand 16 mit Passsitz 23 des becherförmigen Gehäuses 5 aufgebracht werden kann. Gleichzeitig dient dieser Passsitz 23 dem Abdichten des Gehäuses 5 und der Gehäuseverlängerung 20 beim Mischen der Komponenten 12 und 13. Für die Langzeitlagerung ist das Gehäuse 5 im Bereich der Öffnung 15 mit einer Trennmembran 9 mediendicht verschlossen, die stoffschlüssig mit dem Passsitz des Randes 16 verbunden ist. Außerdem ist die Gehäuseverlängerung 20 für die Langzeitlagerung der zweiten Komponente 13 mit zwei Trennfolien 17 und 18 ausgestattet, welche die beiden Öffnungen der Gehäuseverlängerung 20 mediendicht verschließen.

Figur 6 zeigt einen schematischen Querschnitt durch das Einwegverpackungssystem 3 gemäß Figur 5 nach einem Mischen der in Figur 5 gezeigten Komponenten 12 und 13 zu einem Mehrkomponentensystem 6. Dazu werden in dieser Ausführungsform der Erfindung drei Membranfolien durchstoßen bzw. aufgerissen, nämlich die in Figur 5 gezeigten Membranfolien 9, 17 und 18. Der Vorteil eines derartigen Einwegverpackungssystems ist es, dass unterschiedliche Komponenten kombiniert werden können, die in entsprechenden mediendicht abgeschlossenen Gehäuseverlängerungen 20 aufbewahrt und gelagert werden.

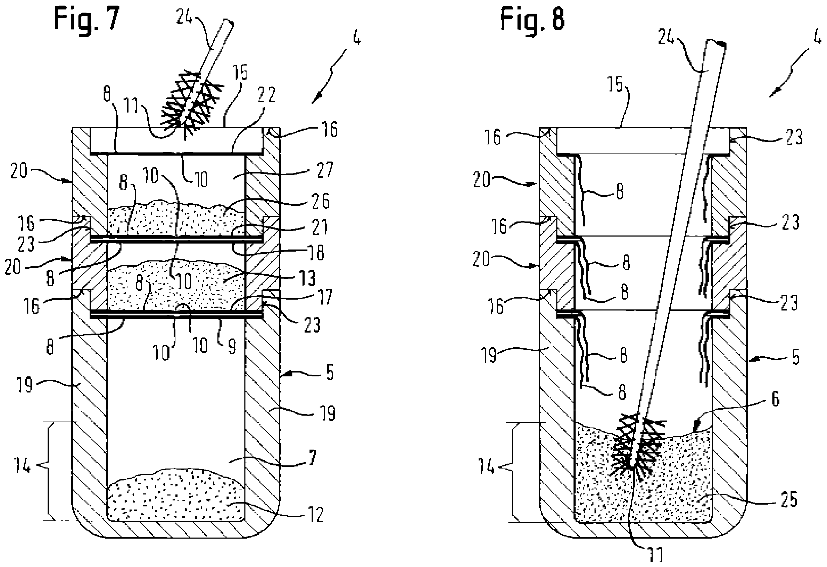

Figur 7 zeigt einen schematischen Querschnitt durch ein Einwegverpackungssystem 4 einer weiteren Ausführungsform der Erfindung vor einem Mischen von Komponenten 12, 13 und 26, wobei die dritte Komponente 26 in einer weiteren Gehäuseverlängerung 20 mit entsprechendem Passsitz 23 dosiert eingebracht ist. Die Figur 7 zeigt die große Flexibilität und Vielseitigkeit des erfindungsgemäßen Einwegverpackungssystems 4 durch das eine Vielzahl unterschiedlicher Komponenten in unterschiedlichen Dosierungen in den mediendicht und stoffschlüssig mit Trennmembranfolien versiegelten steifen Verlängerungen 20 und/oder steifen Gehäusen vorgehalten und gelagert werden können. Dazu können die Behältnisse wie Gehäuse 5 und Verlängerungen 20 durch Farbkodierungen, Beschriftungen, Etikettierungen, Balkencodekodierungen und/oder durch Mikrochipmarkierungen in vorteilhafter Weise unterscheidbar gekennzeichnet sein.

Figur 8 zeigt einen schematischen Querschnitt durch das Einwegverpackungssystem 4 gemäß Figur 7 nach einem Mischen der Komponenten zu einem Mehrkomponentensystems 6, wobei mit Hilfe eines Applizierpinsels 24, der eine Spitze 11 aufweist, die in Figur 7 gezeigten fünf Trennmembranfolien 9, 17, 18, 21 und 22 aufgerissen wurden, und sich die gestapelte Reihe der in Figur 7 gezeigten Komponenten 12, 13 und 26 im Bodenbereich 18 des steifen becherförmigen Gehäuses 5 gesammelt haben und mit Hilfe des Applizierpinsels 24 gemischt wurden.

### Bezugszeichenliste

- 1: Einwegverpackungssystem (Stand der Technik)
- 2: Einwegverpackungssystem (1. Ausführungsform)
- 3: Einwegverpackungssystem (2. Ausführungsform)
- 4: Einwegverpackungssystem (3. Ausführungsform)
- 5: Gehäuse
- 6: Mehrkomponentenmaterial
- 7: Bereich(des Gehäuses)
- 8: Folie bzw. Folienmaterial
- 9: Trennmembran bzw. Trennmembranfolie
- 10: Schwachstelle
- 11: spitzer Gegenstand
- 12: Substanz bzw. Komponente (Boden)
- 13: Substanz bzw. Komponente (Öffnung)
- 14: Gehäusebodenbereich
- 15: Öffnung
- 16: Rand der Öffnung
- 17: Trennmembran
- 18: Trennmembran
- 19: Gehäusewände
- 20: Gehäuseverlängerung bzw. Gehäuseverlängerungsstück
- 21: Trennmembran
- 22: Trennmembran
- 23: Passsitz
- 24: Pinsel
- 25: Gemisch bzw. gemischte Substanz
- 26: dritte Komponente
- 27: zweiter Bereich

## Patentansprüche

1. Einwegverpackungssystem zur Lagerung und Ausbringung von Mehrkomponentenmaterialien (6) für ein Mikrodosieren und/oder ein Applizieren von Mehrkomponentenmaterialien in der Medizin- oder Zahntechnik, wobei das Einwegverpackungssystem (2) mindestens in zwei Bereiche (7,27) zur Aufbewahrung und Mischung von Mehrkomponentenmaterialien (6) durch Folien (8) getrennt ist, wobei die Folien (8) als Trennmembranen (9,17,18) mediendicht und stoffschlüssig vorgesehen sind, und wobei die Trennmembranen (9,17,18) Schwachstellen (10) aufweisen können, die bei Berührung mit einem spitzen Gegenstand (11) aufreißen, so dass sich die durch die Trennmembranen (9,17,18) getrennten Substanzen (12,13) der Mehrkomponentenmaterialien (6) vermischen, wobei das Einwegverpackungssystem (2) einen steifen Gehäusebodenbereich (14), steife Gehäusewände (19) und eine dem Gehäuseboden (14) gegenüber angeordnete Öffnung (15) mit Rand (16) aufweist, wobei eine Materialkomponente (12) des Mehrkomponentenmaterials (6) im Gehäusebodenbereich (14) angeordnet ist, wobei die Öffnung (15) von einer Trennmembran (9) abgedeckt ist, und wobei auf die Öffnung (15) eine an den Querschnitt der Gehäusewände (19) angepasste steife Gehäuseverlängerung (20) aufgesetzt ist, und wobei die Gehäuseverlängerung (20) eine weitere Materialkomponente (13) des Mehrkomponentenmaterials (6) zwischen zwei Trennmembranen (17,18) aufweist, welche die Gehäuseverlängerung (20) mediendicht versiegeln, wobei der Rand (16) der Öffnung (15) einen Passsitz (23) aufweist auf dem eine Gehäuseverlängerung (20) passgenau und zentriert aufgesetzt ist.

2. Einwegverpackungssystem nach Anspruch 1,
**dadurch gekennzeichnet, dass**
das Einwegverpackungssystem (2) mehrere Gehäuseverlängerungen (20) aufweist.

3. Einwegverpackungssystem nach Anspruch 2,
**dadurch gekennzeichnet, dass**
die Ränder (16) der Öffnungen (15) der Gehäuseverlängerung (20) Passsitze (23) aufweisen, auf denen zentriert eine Mehrzahl von Gehäuseverlängerungen (20) mit entsprechenden Passsitzen (23) stapelbar ist.

4. Einwegverpackungssystem nach einem der vorhergehenden Ansprüche,
**dadurch gekennzeichnet, dass**
die Trennmembranen (9,17,18) mit dem Rand (16) der Öffnung (15) stoffschlüssig verbunden sind.

5. Einwegverpackungssystem nach einem der vorhergehenden Ansprüche,
**dadurch gekennzeichnet, dass**
der Gehäusebodenbereich (14), die Gehäusewände (19) und die Gehäuseverlängerungen (20) einen polymeren Kunststoff aufweisen.

6. Einwegverpackungssystem nach einem der Ansprüche 1 bis 4,
**dadurch gekennzeichnet, dass**
der Gehäusebodenbereich (14), die Gehäusewände (19) und gegebenenfalls auch die Gehäuseverlängerungen (20) eine Aluminiumlegierung aufweisen.

7. Einwegverpackungssystem nach einem der vorhergehenden Ansprüche,
**dadurch gekennzeichnet, dass**
das Einwegverpackungssystem (2) zum Mischen und Aufbringen der Mehrkomponentenmaterialien (6) einen eine Spitze aufweisenden Pinsel (24) aufweist.

8. Verfahren zum Herstellen eines direkt applizierbaren Gemisches (25) mehrerer Komponenten (12,13) eines Mehrkomponentenmaterials (6), wobei das Verfahren folgende Verfahrensschritt aufweist:
- Bereitstellen eines Einwegverpackungssystems (2) gemäß einem der vorhergehenden Ansprüche, wobei der Gehäusebodenbereich (14) und der Bereich zwischen den Trennmembranen (9,17,18) jeweils mindestens eine Materialkomponente (12,13) aufweisen,
- Einführen eines spitzen Gegenstandes (11) in die Schwachstelle (10) der Trennmembranen (9,17,18);
- Mischen der im Gehäusebodenbereich (14) sich sammelnden Komponenten (12,13);
- Entnehmen der gemischten Substanz (25) aus dem Gehäusebodenbereich (14) und
- gegebenenfalls Applizieren der gemischten Substanz (25); und
- gegebenenfalls Entsorgen der Einwegverpackung (2).

9. Verfahren nach Anspruch 8,
**dadurch gekennzeichnet, dass**
als spitzer Gegenstand (11) ein zahnmedizinisches Werkzeug oder ein Applizierpinsel (24) mit einer Spitze (11) verwendet wird.

10. Verfahren nach Anspruch 8 oder Anspruch 9,
**dadurch gekennzeichnet, dass**
zum Entnehmen der gemischten Substanz (25) aus dem Gehäusebodenbereich (14) ein zahnmedizinisches Werkzeug eingesetzt wird.

11. Verfahren nach einem der Ansprüche 8 bis 10,
**dadurch gekennzeichnet, dass**
zur Lagerung einzelne Komponenten (12,13) im Gehäusebodenbereich (14) eingebracht und die Öffnung (15) mit einer Trennmembranfolie (9) stoffschlüssig und mediendicht versiegelt wird.

12. Verfahren nach einem der Ansprüche 8 bis 11,
**dadurch gekennzeichnet, dass**
zur Vorratslagerung mehrerer Komponenten (12,13) Gehäuseverlängerungsstücke (20) einseitig, stoffschlüssig und mediendicht verschlossen werden, anschließend in jedes der Gehäuseverlängerungsstücke (20) eine Komponente (12,13) dosiert eingebracht wird und abschließend die Gehäuseverlängerungsstücke (20) mit einer zweiten Trennmembranfolie stoffschlüssig und mediendicht versiegelt werden.

13. Verfahren nach Anspruch 12,
**dadurch gekennzeichnet, dass**
als Mehrkomponentenmaterialien (6) die Komponenten eines medizinischen Klebstoffs oder eines medizinischen Dichtmittels oder eines medizinischen Füllmaterials oder eines medizinischen Zements, oder eines zahnmedizinischen Versiegelungslackes, oder einer fließfähigen medizinische Paste, in den Gehäusebodenbereichen (14) und/oder in den Gehäuseverlängerungen (20) dosiert eingebracht werden.

## Claims

1. Disposable packaging system for storing and dispensing multi-component materials (6) for micro-dispensing and/or application of multi-component materials in medicine or dentistry, wherein the disposable packaging system (2) is separated by films (8) into at least two regions (7, 27) for storing and mixing multi-component materials (6), wherein the films (8) are provided in the form of separating membranes (9, 17, 18) with media-tightness and bonded connection, and wherein the separating membranes (9, 17, 18) can have weak points (10) which tear open on contact with a sharp object (11), so that the substances (12, 13) of the multi-component materials (6) separated by the separating membranes (9, 17, 18) mix together, wherein the disposable packaging system (2) has a rigid housing base region (14), rigid housing walls (19) and an opening (15) which is arranged opposite the housing base (14) and has a rim (16), a material component (12) of the multi-component material (6) being arranged in the housing base region (14), the opening (15) being covered by a separating membrane (9), and there being mounted on the opening (15) a rigid housing extension (20) matched to the cross-section of the housing walls (19), and the housing extension (20) having a further material component (13) of the multi-component material (6) between two separating membranes (17, 18) which seal the housing extension (20) mediatightly, wherein
the rim (16) of the opening (15) has a closely fitting seat (23) on which a housing extension (20) is mounted so as to be exactly fitting and centred.

2. Disposable packaging system according to claim 1,
**characterized in that**
the disposable packaging system (2) has a plurality of housing extensions (20).

3. Disposable packaging system according to claim 2,
**characterized in that**
the rims (16) of the openings (15) of the housing extension (20) have closely fitting seats (23) on which, centred, a plurality of housing extensions (20) having corresponding closely fitting seats (23) can be stacked.

4. Disposable packaging system according to any one of the preceding claims,
**characterized in that**
the separating membranes (9, 17, 18) are joined to the rim (16) of the opening (15) with a bonded connection.

5. Disposable packaging system according to any one of the preceding claims,
**characterized in that**
the housing base region (14), the housing walls (19) and the housing extensions (20) have a polymeric plastics material.

6. Disposable packaging system according to any one of claims 1 to 4,
**characterized in that**
the housing base region (14), the housing walls (19) and optionally also the housing extensions (20) have an aluminium alloy.

7. Disposable packaging system according to any one of the preceding claims,
**characterized in that**
the disposable packaging system (2) for mixing and dispensing the multi-component materials (6) has a brush (24) having a point.

8. Method of preparing a directly applicable mixture (25) of a plurality of components (12, 13) of a multi-component material (6), the method having the following method steps:
- providing a disposable packaging system (2) in accordance with any one of the preceding claims, the housing base region (14) and the region between the separating membranes (9, 17, 18) in each case having at least one material component (12, 13);
- introducing a sharp object (11) into the weak point (10) of the separating membranes (9, 17, 18);
- mixing the components (12, 13) that collect in the housing base region (14);
- removing the mixed substance (25) from the housing base region (14), and
- if applicable, applying the mixed substance (25); and
- if applicable, disposing of the disposable packaging (2).

9. Method according to claim 8,
**characterized in that**
a dental tool or an applicator brush (24) having a point (11) is used as the sharp object (11).

10. Method according to claim 8 or claim 9,
**characterized in that**
a dental tool is used for removing the mixed substance (25) from the housing base region (14).

11. Method according to any one of claims 8 to 10,
**characterized in that**
for storage, individual components (12, 13) are introduced into the housing base region (14) and the opening (15) is sealed with media-tightness and bonded connection by means of a separating membrane film (9).

12. Method according to any one of claims 8 to 11,
**characterized in that**
for storing a stock of a plurality of components (12, 13) housing extension pieces (20) are closed on one side, with media-tightness and bonded connection, then a measured amount of a component (12, 13) is introduced into each of the housing extension pieces (20) and finally the housing extension pieces (20) are sealed with media-rightness and bonded connection by means of a second separating membrane film (9).

13. Method according to claim 12,
**characterized in that**
as multi-component materials (6) the components of a medical glue or of a medical sealing agent or of a medical filling material or of a medical cement or of a dental sealing lacquer or of a flowable medical paste are introduced in measured amounts into the housing base regions (14) and/or into the housing extensions (20).

## Revendications

1. Système d'emballage à usage unique permettant le stockage et la distribution de matières à plusieurs composants (6) pour un microdosage et/ou une application de matières à plusieurs composants dans la technique médicale ou dentaire, dans lequel le système d'emballage à usage unique (2) est séparé par des films (8) en au moins deux zones (7, 27) pour la conservation et le mélange de matières à plusieurs composants (6), dans lequel les films (8) sont prévus sous forme de membranes de séparation (9, 17, 18) de manière étanche aux milieux et par liaison de matière, et dans lequel les membranes de séparation (9, 17, 18) peuvent présenter des points de rupture (10), qui, au contact d'un objet pointu (11), provoquent une ouverture par déchirement, de sorte que les substances (12, 13) des matières à plusieurs composants (6) séparées par les membranes de séparation (9, 17, 18) se mélangent,
dans lequel
le système d'emballage à usage unique (2) présente une zone de fond de logement (14) rigide, des parois de logement (19) rigides et une ouverture (15) avec bord (16) pratiquée à l'opposé du fond de logement (14), dans lequel un composant de matière (12) de la matière à plusieurs composants (6) est agencé dans la zone de fond de logement (14), dans lequel l'ouverture (15) est recouverte par une membrane de séparation (9), et dans lequel un prolongement de logement (20) rigide adapté à la section transversale des parois de logement (19) est mis en place sur l'ouverture (15), et dans lequel le prolongement de logement (20) comprend un autre composant de matière (13) de la matière à plusieurs composants (6) entre deux membranes de séparation (17, 18), lesquelles scellent le prolongement de logement (20) de manière étanche aux matières, dans lequel le bord (16) de l'ouverture (15) présente un siège ajusté (23) sur lequel un prolongement de logement (20) est mis en place en ajustement précis et de manière centrée.

2. Système d'emballage à usage unique selon la revendication 1,
**caractérisé en ce que**
le système d'emballage à usage unique (2) comprend plusieurs prolongements de logement (20).

3. Système d'emballage à usage unique selon la revendication 2,
**caractérisé en ce que**
les bords (16) des ouvertures (15) du prolongement de logement (20) présentent des sièges ajustés (23) sur lesquels une pluralité de prolongements de logement (20) peuvent être empilés de manière centrée au moyen de sièges ajustés (23) correspondants.

4. Système d'emballage à usage unique selon l'une quelconque des revendications précédentes,
**caractérisé en ce que**
les membranes de séparation (9, 17, 18) sont reliées par liaison de matières au bord (16) de l'ouverture (15).

5. Système d'emballage à usage unique selon l'une quelconque des revendications précédentes,
**caractérisé en ce que**
la zone de fond de logement (14), les parois de logement (19) et les prolongements de logement (20) présentent une matière plastique polymère.

6. Système d'emballage à usage unique selon l'une quelconque des revendications 1 à 4,
**caractérisé en ce que**
la zone de fond de logement (14), les parois de logement (19) et le cas échéant également les prolongements de logement (20) présentent un alliage d'aluminium.

7. Système d'emballage à usage unique selon l'une quelconque des revendications précédentes,
**caractérisé en ce que**
le système d'emballage à usage unique (2), pour le mélange et l'application des matières à plusieurs composants (6), présente un pinceau (24) pourvu d'une pointe.

8. Procédé de fabrication d'un mélange (25) de plusieurs composants (12, 13) d'une matière à plusieurs composants (6) pouvant être appliqué directement, dans lequel le procédé comprend les étapes de procédé suivantes :
- la fourniture d'un système d'emballage à usage unique (2) selon l'une quelconque des revendications précédentes, dans lequel la zone de fond de logement (14) et la zone entre les membranes de séparation (9, 17, 18) présentent respectivement au moins un composant de matière (12, 13),
- l'introduction d'un objet pointu (11) dans le point de rupture (10) des membranes de séparation (9, 17, 18) ;
- le mélange des composants (12, 13) qui s'accumulent dans la zone de fond de logement (14) ;
- le prélèvement de la substance mélangée (25) de la zone de fond de logement (14) et
- le cas échéant l'application de la substance (25) mélangée ; et
- le cas échéant l'élimination de l'emballage à usage unique (2).

9. Procédé selon la revendication 8,
**caractérisé en ce que**
un outil dentaire ou un pinceau d'application (24) pourvu d'une pointe (11) est utilisé comme objet pointu (11).

10. Procédé selon la revendication 8 ou selon la revendication 9,
**caractérisé en ce que**
un outil dentaire est utilisé pour le prélèvement de la substance (25) mélangée de la zone de fond de logement (14).

11. Procédé selon l'une quelconque des revendications 8 à 10,
**caractérisé en ce que**
pour le stockage, différents composants (12, 13) sont introduits dans la zone de fond de logement (14) et l'ouverture (15) est scellée par liaison de matières et de manière étanche aux milieux au moyen d'un film formant membrane de séparation (9) .

12. Procédé selon l'une quelconque des revendications 8 à 11,
**caractérisé en ce que**
pour le stockage en réserve de plusieurs composants (12, 13), des parties de prolongement de logement (20) sont fermées unilatéralement, par liaison de matières et de manière étanche aux milieux, puis un composant (12, 13) est introduit de manière dosée dans chacune des parties de prolongement de logement (20) et pour finir les parties de prolongement de logement (20) sont scellées par liaison de matières et de manière étanche aux milieux au moyen d'un deuxième film formant membrane de séparation.

13. Procédé selon la revendication 12,
**caractérisé en ce que**
les composants d'un adhésif médical ou d'un produit d'étanchéité médical ou d'une matière de remplissage médicale ou d'un ciment médical, ou d'un vernis de scellement dentaire, ou d'une pâte médicale coulante sont introduits de manière dosée en tant que matières à plusieurs composants (6) dans les zones de fond de logement (14) et/ou dans les prolongements de logement (20).
